**Europäisches Patentamt**

**European Patent Office**

**Office européen des brevets**

(19)

(11) Veröffentlichungsnummer: **0 141 237**
**B1**

(12) **EUROPÄISCHE PATENTSCHRIFT**

(45) Veröffentlichungstag der Patentschrift:
**24.06.87**

(51) Int. Cl.⁴: **G 21 C 15/18**

(21) Anmeldenummer: **84111357.4**

(22) Anmeldetag: **24.09.84**

(54) **Anordnung zur Kühlung einer wärmeerzeugenden Vorrichtung.**

(30) Priorität: **28.09.83 SE 8305234**

(43) Veröffentlichungstag der Anmeldung:
**15.05.85 Patentblatt 85/20**

(45) Bekanntmachung des Hinweises auf die Patenterteilung:
**24.06.87 Patentblatt 87/26**

(84) Benannte Vertragsstaaten:
**DE FR GB IT**

(56) Entgegenhaltungen:
**EP - A - 0 022 714**
**FR - A - 2 193 233**
**FR - A - 2 500 676**
**FR - A - 2 502 828**
**US - A - 3 207 671**
**US - A - 4 367 194**

(73) Patentinhaber: **AB ASEA-ATOM, S-721 83 Västeras (SE)**

(72) Erfinder: **Fredell, Jan, Dipl.-Ing., Hemfridsgatan 1,
S-724 75 Västeras (SE)**
Erfinder: **Hannerz, Kare, Raby Rytterne,
S-725 92 Västeras (SE)**

(74) Vertreter: **Boecker, Joachim, Dr.-Ing.,
Rathenauplatz 2-8, D-6000 Frankfurt a.M. 1 (DE)**

**Beschreibung**

Die vorliegende Erfindung betrifft eine Anordnung gemäss dem Oberbegriff des Anspruches 1.

Eine bekannte Art, die Kühlung einer in einem geschlossenen Behälter befindlichen Wärmequelle (zum Beispiel ein Reaktorkern mit Nachleistung) während einer verhältnismässig langen Zeit sicherzustellen, besteht darin, den Behälter mit Wasser zu füllen, wobei die Verdampfung dieses Wassers die von der Wärmequelle entwickelte Leistung absorbiert. Der erzeugte Dampf wird dabei über Drucksicherheitsventile abgelassen.

Wenn jedoch im unteren Teil des Druckbehälters ein Loch auftritt, kann durch dieses Wasser im flüssigen Aggregatzustand herauslecken, ohne dass seine Verdampfungswärme zur Kühlung verwertet werden kann, wodurch die Kühlwirkung dieses Wassers verloren geht.

Der Erfindung liegt die Aufgabe zugrunde, eine Anordnung der eingangs genannten Art zu entwickeln, bei welcher durch ein Leck im unteren Teil des Druckbehälters kein Verlust der Wärmesenke verursacht wird.

Zur Lösung dieser Aufgabe wird eine Anordnung gemäss dem Oberbegriff des Anspruches 1 vorgeschlagen, die erfindungsgemäss die im kennzeichnenden Teil des Anspruches 1 genannten Merkmale hat.

Eine vorteilhafte Weiterbildung der Erfindung ist in dem weiteren Anspruch genannt.

Bei einer Anordnung gemäss der Erfindung kann der Aussenbehälter für einen Druck bemessen werden, der erheblich unter dem Arbeitsdruck für den Innenbehälter liegt. Dies liegt daran, dass das in den Aussenbehälter leckende Wasser durch eine Rohrverbindung in die freie Umgebung abfliessen kann, nämlich in ein mit seinem Boden über dem Druckbehälter liegendes, nach aussen nicht abgedichtetes Bassin. An diese Bassin sind eine Zuführleitung und eine Abführleitung für eine Kühlschlange angeschlossen, die im oberen Bereich des Druckbehälters angeordnet ist.

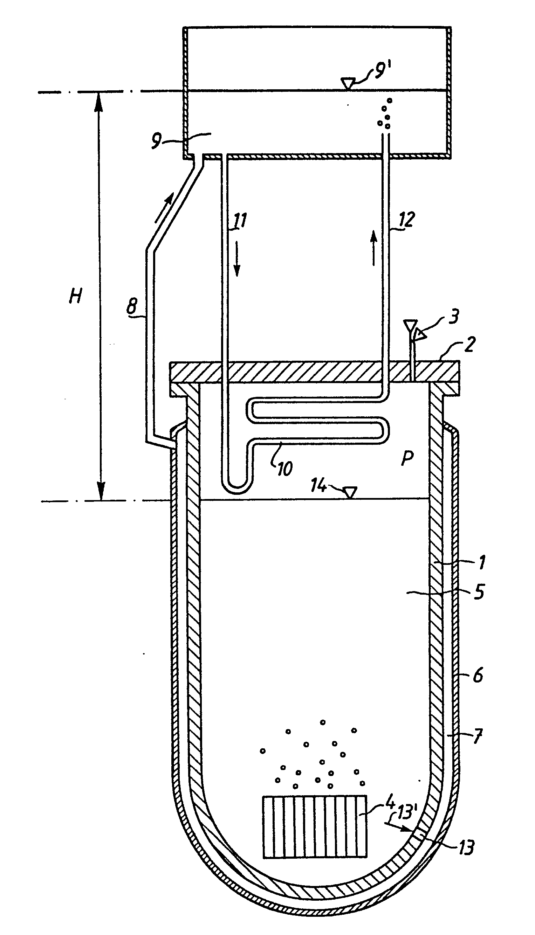

Anhand des in der Figur gezeigten Ausführungsbeispiels soll die Erfindung näher erläutert werden:

Die Figur zeigt einen Schnitt längs der vertikalen Symmetrieachse eines Druckbehälters mit kreisförmigem Querschnitt, der zu einer Anordnung gemäss der Erfindung gehört.

In der Figur bezeichnet 1 einen Druckbehälter, der aus Spannbeton besteht und zu einem Kernreaktor der in der GB-A 2098786 beschriebenen Art gehört. Der Druckbehälter ist mit einem druckdicht aufgesetzten kreisförmigen Deckel 2 verschlossen, der mit einem Überdruckventil 3 ausgerüstet ist. Ein zu einem solchen Reaktor gehörender Reaktorkern 4 ist in seiner Gesamtheit in der unteren Hälfte, normalerweise in dem unteren Viertel, des Behältervolumens 5 angeordnet, welches durch den Druckbehälter 1 und den Deckel 2 abgegrenzt wird.

Um bei einem eventuellen Leck im Druckbehälter 1 den Verlust der Wärmesenke zu vermeiden, ist der Druckbehälter 1 von einem Aussenbehälter 6 umgeben, der für einen Druck bemessen ist, der kleiner als der halbe Betriebsdruck im Druckbehälter 1 ist. Der Aussenbehälter 6 umgrenzt zusammen mit dem Druckbehälter 1 einen geschlossenen Hilfsraum 7, dessen Volumen kleiner als 1/4, vorzugsweise kleiner als 1/8, des Behältervolumens 5 ist. Der Hilfsraum 7 ist über mindestens ein Rohr 8 hydraulisch mit einem offenen Verdampfungsbassin 9 mit kreisförmigem Querschnitt verbunden, das bei normalem Reaktorbetrieb leer sein kann. Auch der Hilfsraum 7 kann leer sein, jedoch ist er — zusammen mit wenigstens einem Teil des Rohrers 8 — vorzugsweise mit Wasser gefüllt. Im Druckbehälter 1 ist in der Nähe des Deckels 2 eine Kühlschlange 10 angebracht. Die Kühlschlange 10 ist über zwei druckdicht durch den Behälterdeckel 2 und den Boden des Verdampfungsbassins laufende Verbindungsrohre 11 und 12 hydraulisch mit dem Verdampfungsbassin 9 verbunden, wobei das Rohr 11 ein Zulaufrohr und das Rohr 12 ein Ablaufrohr für die Kühlschlange 10 ist. Das Rohr 11 mündet auf oder nahe dem Bodenniveau des Verdampfungsbassins, während das Rohr 12 auf einem etwas höheren Niveau mündet.

Das Reaktorkern 4 ist in einem in der Figur nicht dargestellten Reaktorbehälter angeordnet, der an seinem unteren und oberen Ende in hydraulischer Verbindung mit einer Bassinflüssigkeit, z.B. einer wässrigen Lösung aus Borsäure, steht. Bei normalem Reaktorbetrieb ist diese wässerige Lösung daran gehindert, in den Reaktorkern hineinzuströmen. Der Reaktorkern 4 wird bei normalem Reaktorbetrieb durch einen durch den Reaktorkern 4 und den Reaktorbehälter strömenden Kühlmittelfluss gekühlt, dessen Höchsttemperatur grösser als 150 Grad C, vorzugsweise grösser als 200 Grad C, ist. Die genannte Bassinflüssigkeit nimmt den grössten Teil des Behältervolumens 5 ein und hat eine mittlere Temperatur, die bei normalem Reaktorbetrieb mindestens 100 Grad C unter der oben genannten Höchsttemperatur liegt. Wenn in der Wand des Druckbehälters 1 ein Leck auftritt, z.B. das mit dem Pfeil 13' angedeutete Leck 13, so sinkt die Bassinflüssigkeit von der Unterseite des Deckels 2 auf ein tieferes Niveau, wobei dem Verdampfungsbassin 9 durch das Rohr 8 verhältnismässig kalte Flüssigkeit zugeführt wird. Dadurch, dass das Niveau der im Druckbehälter 1 befindlichen Flüssigkeit sinkt, wird das vorhandene Druckgleichgewicht zwischen Bassinflüssigkeit und Reaktorkühlmittel gestört, was zur Folge hat, dass das borierte Bassinwasser durch den Reaktorkern strömt, dessen Leistung dabei auf die Nachleistung reduziert wird. Die Figur zeigt einen Gleichgewichtszustand, bei dem die durch das Leck 13 herausgepresste Wassermenge dazu geführt hat, dass eine ungefähr gleich grosse Wassermenge dem Verdampfungsbassin 9 zugeführt wurde, wodurch dieses auf das Niveau 9' gefüllt wurde, während der über dem Wasserniveau 14 liegende Teil des Behältervolumens 5 gesättigten Wasserdampf enthält, dessen Dampfdruck P durch die Gleichung

$$P = 1 \text{ atm} + H \times \rho \times g$$

gegeben ist, wobei H der Niveauunterschied zwischen den beiden Niveaus 9' und 14, ρ die Dicht der wässerigen Lösung und g = 9,81 m/s² ist. Der Niveauunterschied H ist so gross gewählt, dass die dem Sättigungsdruck P entsprechenden Temperatur bedeutend grösser als 100 Grad C, beispielsweise 120 Grad C, ist. Das in dem Verdampfungsbassin 9 befindliche Wasser kocht hingegen bei einer Temperatur von 100 Grad C (wenn man den Einfluss des Borzusatzes auf den Siedepunkt vernachlässigt), weshalb die Temperatur der der Kühlschlange 10 zugeführten Flüssigkeit diese Temperatur nie überschreitet. Der über dem Niveau 14 befindliche Dampf kondensiert daher an der Kühlschlange 10, die dabei Dampf erzeugt und diesen durch das Rohr 12 dem Verdampfungsbassin zuführt. Die in dem Verdampfungsbassin befindliche Flüssigkeit strömt infolge Selbstzirkulation durch die Kühlschlange 10 und beginnt an einem Punkt zu kochen, der nahe der Bassinoberfläche 9' liegt.

Der Überdruck im Druckbehälter 1 wird von dem Höhenunterschied H zwischen den Niveaus 14 und 9' bestimmt. Dieser wird sich auf einen Wert einstellen, der u.a. von der Grösse der Wärmeübergangsfläche der Kühlschlange 10 abhängt. Wenn diese Fläche gross genug ist, so wird das ganze System kein Wasser, sondern nur den im Verdampfungsbassin 9 erzeugten Wasserdampf abgeben. Das durch das Leck unten im Druckbehälter 1 ausgeströmte Wasser ist also als Wärmesenke nicht verlorengegangen, sondern wirkt voll bei der Kühlung des Reaktorkerns 4 mit. Der Aussenbehälter 6 braucht nur für einen Überdruck ausgelegt zu werden, welcher der Höhe der Wassersäule für die Oberfläche des Verdampfungsbassins sowie dem Strömungs- und Beschleunigungsdruckabfall entspricht. Die Kondensationsfläche der Kühlschlange wird so angeordnet, dass sie nicht von einem eventuell in dem Innenbehälter permanent vorhandenen Gas blockiert wird.

Die in der Figur gezeigte Anordnung ist nur eine von mehreren möglichen Ausführungsbeispielen einer Anordnung gemäss der Erfindung.

So kann die Anordnung bei verschiedenen bekannten Bassinreaktoren verwendet werden, vorausgesetzt, dass ihre Bassins jeweils mit einem druckdichten Deckel versehen sind.

Ferner kann eine Anordnung gemäss der Erfindung zur Kühlung wärmeerzeugender Vorrichtungen verwendet werden, bei welchen die Wärme nicht durch Kernenergie erzeugt wird.

Statt einer einzigen Kühlschlange 10 können mehrere Kühlschlangen verwendet werden, und statt des gezeigten Verdampfungsbassins 9 kann ein Bassin verwendet werden, bei welchem die Höhe grösser als die grösste horizontale Abmessung ist. Ferner kann das Verdampfungsbassin mit einem Deckel versehen sein, wobei der Bassinraum über mindestens eine Öffnung in dem Deckel, beispielsweise eine an einen Schornstein angeschlossene Öffnung, mit Luft von atmosphärischem Druck in Verbindung steht.

## Patentansprüche

1. Anordnung zur Kühlung einer wärmeerzeugenden Vorrichtung (4) mit einen Druckbehälter (1), bei dem das nicht von festen Körpern eingenommene Behältervolumen zum grössten Teil mit einer Flüssigkeit gefüllt ist, die als Wärmesenke für die wärmeerzeugende Vorrichtung (4) dient, die in dem Druckbehälter (1) angeordnet ist, dadurch gekennzeichnet, dass die Anordnung einen Aussenbehälter (6), ein über dem Druckbehälter (1) angeordnetes Verdampfungsbassin (9) und eine in einem oberen Abschnitt des Druckbehälters (1) angeordnete Kühlschlange (10) enthält, dass der Aussenbehälter (6) den Druckbehälter auf solche Weise umgibt, dass ein geschlossener Hilfsraum (7) mit einem verhältnismässig kleinen Volumen zwischen dem Druckbehälter und dem Aussenbehälter gebildet wird, dass der Hilfsraum (7) über mindestens eine hydraulische Verbindungsvorrichtung (8) mit dem Verdampfungsbassin (9) verbunden ist, dass die beiden Enden der genannten Kühlschlange über ein erstes (11) beziehungsweise ein zweites (12) in den Druckbehälter (1) und in das Verdampfungsbassin (9) eingeführtes Anschlussrohr mit dem Verdampfungsbassin hydraulisch verbunden sind und dass ein eventuelles Leck zwischen dem Druckbehälter (1) und dem Hilfsraum (7) eine Flüssigkeitszufuhr zu der Kühlschlange (10) auslöst.

2. Anordnung nach Anspruch 1, dadurch gekennzeichnet, dass das erste Anschlussrohr (11) an ein unteres Ende der Kühlschlange (10) angeschlossen ist, dass das zweite Anschlussrohr (12) an ein oberes Ende der Kühlschlange (10) angeschlossen ist und dass in dem Verdampfungsbassin (9) das erste Anschlussrohr (11) auf einem niedrig gelegenen Niveau und das zweite Anschlussrohr (12) auf einem höher gelegenen Niveau mündet.

## Claims

1. Apparatus for cooling a heat-generating device (4), comprising a pressure vessel (1) in which most of the vessel volume which is not occupied by solid bodies is filled up with a liquid serving as a heat sink for the heat-generating device (4) arranged in the pressure vessel (1), characterized in that the apparatus comprises an outer vessel (6), an evaporation pool (9) arranged above the pressure vessel (1), and a cooling coil (10) arranged within an upper portion of the pressure vessel (1), that the outer vessel (6) surrounds the pressure vessel such that a closed auxiliary space (7) with a relatively small volume is formed between the pressure vessel and the outer vessel, that the auxiliary space (7) is connected via at least one hydraulic connection means (8) with the evaporation pool (9), that the two ends of said cooling coil are hydraulically connected via a first (11) and a second (12) connection tube, which are inserted into the pressure vessel (1) and the evaporation pool (9), with the evaporation pool, and that a possible leakage between the pressure vessel (1) and the auxiliary space (7) causes a supply of liquid to the cooling coil (10).

2. Apparatus according to claim 1, characterized in that the first connection tube (11) is connected to a lower end of the cooling coil (10), that a second connection tube (12) is connected to the upper end of the cooling coil (10), and that the first connection tube (11) opens out in the evaporation pool (9) at a lower level and the second connection tube (12) at a higher level.

## Revendications

1. Dispositif de refroidissement d'une installation de production de la chaleur (4), comprenant une cuve sous pression (1), dont le volume qui n'est pas occupé par des corps solides, est empli, pour la plus grande partie, d'un liquide servant de dissipateur thermique à l'installation de production de la chaleur (4) laquelle est disposée dans la cuve sous pression (1), caractérisé en ce que le dispositif comprend une cuve extérieure (6), un bassin d'évaporation (9) disposé au-dessus de la cuve sous pression (1) et un serpentin de refroidissement (10) disposé dans la partie supérieure de la cuve sous pression (1), en ce que la cuve extérieure (6) entoure la cuve sous pression de façon à former une chambre auxiliaire (7) fermée ayant un volume relativement petit entre la cuve sous pression et la cuve extérieure, en ce que la chambre extérieure (7) communique par au moins un dispositif hydraulique de mise en communication (8) avec le bassin d'évaporation (9), en ce que les deux extrémités du serpentin mentionné communiquent hydrauliquement avec le bassin d'évaporation respectivement par un premier tuyau de raccordement (11) et par un second tuyau de raccordement (12) introduits dans la cuve sous pression (1) et dans le bassin d'évaporation (9), et en ce qu'une fuite éventuelle entre la cuve sous pression (1) et la chambre auxiliaire (7) déclenche une amenée de liquide au serpentin de refroidissement (10).

2. Dispositif suivant la revendication 1, caractérisé en ce que le premier tuyau de raccordement (11) est raccordé à une extrémité inférieure du serpentin de refroidissement (10), en ce que le second tuyau de raccordement (12) est raccordé à une extrémité supérieure du serpentin de refroidissement (10), et en ce que le premier tuyau de raccordement (11) débouche à un niveau bas et le second tuyau de raccordement (12) à un niveau plus élevé dans le bassin d'évaporation (9).